# EUROPEAN PATENT APPLICATION

(11) **EP 4 245 394 A1**
(43) Date of publication of application: **20.09.2023**
(21) Application number: 22175908.7
(22) Date of filing: 27.05.2022
(51) Int. Cl.: B01D 19/00, B01J 20/20, B01D 27/00, C02F 1/20, C02F 1/00, C02F 1/28, B01D 29/15

(54) **SINGLE-STAGE FILTRATION SYSTEM**

(30) Priority: 14.03.2022 CN 202220549487 U; 14.03.2022 CN 202210249148
(71) Applicant: Tianjin Yuanzhi Enviromental Protection Technology Co., Ltd, Tianjin (CN)
(72) Inventor: Enyu, Wei, Tianjin (CN)
(74) Representative: Cabinet Chaillot

(57) **Abstract**

Single-stage filtration systems and methods for purifying water are provided. In one embodiment, the water filtration system receives unfiltered water mixed with air into a filtration system through a water inlet junction of a joint operatively coupled to a filter element. The unfiltered water and air received through the water inlet junction flows into an inlet channel of a filter element, thereby diverting the unfiltered water and air into the filter element through an inlet channel to a gap between a carbon rod and a filter element body, which passes the diverted water through a carbon rod to filter the water and divide the air into bubbles; and discharging the filtered water and air bubbles.

## Description

### Field

The present disclosure relates to the field of filtration, and more particularly to a single-stage filtration system.

### Description of Related Art

The single-stage filtration system is a filtration system with a threaded end cover that opens and closes by moving up and down. The bottle body needs to be unscrewed when disassembling the filter bottle. When the bottle body and the end cover are screwed together too tightly, the compression of the bottle body is too tight to easily disassemble.

In the related art, a single-stage filtration system is of an external pressure type, meaning the water inlet is external to the filter element and directly connected to the water inlet junction in the joint. When the pressure is too high, the air in the water passes through the water inlet, forming bubbles, and the bubbles impacting the water inlet produces noise.

### SUMMARY OF THE INVENTION

In one embodiment, a method for purifying water is provided, where the water filtration system receives unfiltered water mixed with air into a filtration system through a water inlet junction of a joint operatively coupled to a filter element, and wherein the unfiltered water and air received through the water inlet junction flows into an inlet channel of a filter element, thereby diverting the unfiltered water and air into the filter element through an inlet channel to a gap between a carbon rod and a filter element body, which passes the diverted water through a carbon rod to filter the water and divide the air into bubbles, and discharging the filtered water and air bubbles.

The small bubbles and water may be discharged via a water outlet junction of a joint operatively coupled to a filter element.

In another embodiment, a water filtration system is provided, comprising a joint comprising a joint body comprising a water inlet cavity, a water outlet cavity, a water inlet joint, a water outlet joint, a connecting flange and a hanging piece, a water inlet junction comprising a water inlet cavity configured to receive unfiltered water, and a water outlet junction comprising a water outlet cavity configured to discharge filtered water. The joint may also comprise a connecting flange configured to join the joint and the filter element. The connecting flange may be C-shaped. The filter element may be configured to purify the unfiltered water, and comprises a filter element body with one end open and a second end enclosed by a connector of smaller diameter than the rest of the filter element body, a central pipe, a carbon rod, a carbon rod cover, and a carbon rod bottom disposed within the filter element body, as well as an end cover covering the open end of the filter element body, a body sealing ring, a water inlet sealing ring, a water inlet cover plate, and an end cover covering the open end of the filter element body.

In another embodiment, the carbon rod of the water filtration system may be configured such that one end of the carbon rod is connected to a carbon rod cover and the opposite end is connected to a carbon rod bottom, and the carbon rod is further configured within the filter element body such that the outside surface of the carbon rod and the filter element body form a channel for receiving unfiltered water. The channel allows the filtered water to pass into the water outlet junction.

In another embodiment, the water inlet junction of the water filtration system may further comprise a water inlet seating ring, a first cover plate, and a first clip. The water outlet junction may further comprise a water outlet sealing ring, a second cover plate, and a second clip.

In another embodiment, the water inlet joint of the water filtration system is located on the right side of the joint body, and one end of the water inlet joint comprises a water pipe hole, a sealing ring hole and a cover plate hole. The circle of the water pipe hole is connected to the water pipe, the circle of the sealing ring hole is connected to the sealing ring, and the circle of the cover plate hole is connected to the outer circle of the cover plate.

In another embodiment, the filter element of the water filtration system may further comprise a carbon rod cover coupled to the carbon rod, carbon rod cover sealing ring that engages with the carbon rod cover to create a first seal, and a body sealing ring that engages with the filter element body to create a second seal..

In another embodiment, the water filtration system has a body with a barrel-shaped structure with a smaller diameter at one end and a larger diameter at the other end, and the end cover has a cup-shaped structure, with one end open and the other end closed, where the open end is provided with a female half-coupling which is connected to the male half-coupling of the body configured for welding with the body to form a sealed container. Two grooves are provided on the outside of the other end configured to install the body sealing ring, wherein the body sealing ring is configured to seal the connector and the filter element body under pressure and seal the water after filtration by the filter element. The bottom of the closed end further comprises ribs configured to support the end face of the carbon rod bottom. A slotted cylinder may be provided at the bottom of the closed end, which is connected to the central pipe configured for water to enter the gap between the filter element and the carbon rod.

The filter element of the water filtration system may further comprise a water inlet cover plate and a water inlet sealing ring configured to be installed at the connector at one end of the filter element body, where the water inlet sealing ring may engage with the water inlet to create a third seal.

In another embodiment, the water filtration system comprises a water inlet cover plate that comprises a central hole and is installed on the central hole of the body and further comprises a welding line configured to be welded with the body as a whole. The water inlet cover plate may also comprise a groove for installing the water inlet sealing ring.

The joint of the water filtration system may further comprise a hanging piece attached to the top surface of the joint and extending substantially parallel to the body of the joint in the direction of the filter element. The hanging piece may also have holes through the hanging piece.

The filter element body of the water filtration system may comprise a male half coupling at one end. The end cover may comprise a first side that is open, where in the first side comprises a female half coupling configured to join with the male half coupling of the filter element body, and a second side that is substantially covered. The covered side of the end cover further comprises a slotted cylinder centrally located in the covered side. The end cover further comprises a plurality of ribs radiating from the slotted cylinder to the inner edge of the end cover, and wherein the end cover is a cup type structure with one end is open and one end closed, the opening end having a concave stop connected with the body convex stop configured to fuse with the body into a sealed container, and a rib position at the bottom of the closed end to support the bottom end face of the carbon rod. Further, a slotted column at the bottom of the closed end is connected to the central tube and the gap between the inlet water into the filter element and the carbon rod..

The female half coupling and the male half coupling of the water filtration system may be welded together.

The connector of the filter element in the water filtration system may have an outer surface further comprising one or more fan-shaped flanges configured to connect to the connecting flange in the joint.

The connector of the filter element may further comprise two bosses opposite one another on the inside surface.

The connector of the filter element may further comprise a plurality of fan-shaped holes for the filtered water to enter the connector.

The fan-shaped holes may further be contained in a boss.

In another embodiment, the water filtration system is configured such that the filter element and the connector flange further comprise two fan-shaped lugs below the groove for the locking flange of the filter element configured to lock the axial position of the inner plane of the filter element and the connector flange.

The boss of the water filtration system may be welded to the water inlet cover plate of the filter element.

The water filtration system may be configured such that the carbon rod causes air mixed into the unfiltered water to break up into small bubbles that are mixed with the filtered water.

In a further embodiment, a joint for a water filtration system comprises a water inlet junction, a water outlet junction, and a connecting flange. The water inlet junction may be configured to receive unfiltered water through a water inlet cavity and the water outlet junction configured to discharge filtered water through a water outlet cavity.

The joint may further comprise a hanging piece attached to the top surface of the joint and extending substantially parallel to the body of the joint in the direction of the filter element. The hanging piece may also comprises holes through the hanging piece.

In a further embodiment, a filter element for a water filtration system may comprise a filter element body with one end open and a second end enclosed by a connector of smaller diameter than the rest of the filter element body, a central pipe, and a carbon rod disposed within the filter element body. The filter element body may also comprise an end cover covering a first end of the filter element body, a carbon rod cover covering a second end of the filter element body, a carbon rod cover sealing ring operatively coupled to the carbon rod cover, and a body sealing ring operatively coupled to the filter element body.

The carbon rod of the filter element may further be configured to divide air in the unfiltered water into small bubbles that are mixed throughout the filtered water.

It is accordingly a primary object of the invention to more easily install and disassemble the barrel.

It is a further objective of the invention to reduce the wear on the connector caused by repeated disassembly of the filter, ensuring better sealing performance.

It is a further objective of the invention to mitigate the noise produced by the bubble impacting the water inlet.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate several exemplary embodiments and aspects of the disclosed filtration systems and methods and, together with the description, serve to explain the principles of the invention.
Figure 1A is a perspective view of a water filter according to an exemplary embodiment.
Figure 1B is an internal cross section view of the water filter shown in Fig. 1A, according to one exemplary embodiment.
Figure 2 is an external view of a joint of a water filter, in accordance with an exemplary embodiment.
Figure 3 is a view of a disassembled filter element of a water filter, in accordance with an exemplary embodiment.
Figure 4 is a cross-section the joint of a water filter, in accordance with an exemplary embodiment.
Figure 4A is an alternative prospective view of a cross-section the joint of a water filter, in accordance with an exemplary embodiment.
Figure 4B is an alternative prospective view of a cross-section the joint of a water filter, in accordance with an exemplary embodiment.
Figure 5 is a cross-section view of the joint of a water filter, in accordance with an exemplary embodiment.
Figure 6 is a cross-section view of a joint of a water filter, in accordance with an exemplary embodiment.
Figure 7 is an alternative view of a cross-section view of a joint of a water filter, in accordance with an exemplary embodiment.
Figure 8 is a view of the internal structure of a joint of a water filter, in accordance with an exemplary embodiment.
Figure 8A is a view of the internal structure of a joint of a water filter, in accordance with an exemplary embodiment.
Figure 9 is an external view of the rear of a joint of a water filter, in accordance with an exemplary embodiment.
Figure 10 shows certain components of the joint of a water filter, in accordance with an exemplary embodiment.
Figure 11 shows certain components of a filter element of a water filter, in accordance with an exemplary embodiment.
Figure 12 shows the end cover of a filter element of a water filter, in accordance with an exemplary embodiment.
Figure 13 shows the body of a filter element of a water filter, in accordance with an exemplary embodiment.
Figure 14 shows an alternative prospective of the body of a filter element of a water filter, in accordance with an exemplary embodiment.
Figure 15 is a cross-section of the joint of a water filter, in accordance with an exemplary embodiment.
Figure 16 shows the body of a filter element of a water filter, in accordance with an exemplary embodiment.
Figure 17 shows a view from the top of a filter element of a water filter, in accordance with an exemplary embodiment.
Figure 18 is an alternative cross-section prospective of a joint of a water filter, in accordance with an exemplary embodiment.
Figure 19 shows a cross-section of the small cylinder at one end of the filter element of a water filter, in accordance with an exemplary embodiment.
Figure 20 shows a cross-section of the small cylinder at one end of the filter element of a water filter, in accordance with an exemplary embodiment.
Figure 21 is a cross-section of a joint of a water filter, in accordance with an exemplary embodiment.
Figure 22 is a pin-point view of a portion of the water filter, in accordance with an exemplary embodiment.
Figure 23 is a cross-section view of a water filter, in accordance with an exemplary embodiment.
Figure 24 is a cross-section view of a water filter, in accordance with an exemplary embodiment.
Figure 25 is a cross-section of a portion of a water filter, in accordance with an exemplary embodiment.
Figure 26 shows the end cover oriented with the open portion up and the closed end down, in accordance with an exemplary embodiment.
Figure 27 is a cross-section of a portion of a water filter, in accordance with an exemplary embodiment.
Figure 28 is a cross-section of a portion of a water filter, in accordance with an exemplary embodiment.
Figure 29 is a cross-section of a portion of a water filter, in accordance with an exemplary embodiment.
Figure 30 is a cross-section of a portion of a water filter, in accordance with an exemplary embodiment.
Figure 31 is a cross-section of a portion of a water filter, in accordance with an exemplary embodiment.
Figure 32 is a cross-section of a portion of a water filter, in accordance with an exemplary embodiment.

### DETAILED DESCRIPTION

Reference will now be made in detail to the exemplary embodiments, which are illustrated in the accompanying drawings. Wherever possible, the same reference numbers will be used throughout the drawings to refer to the same or like parts.

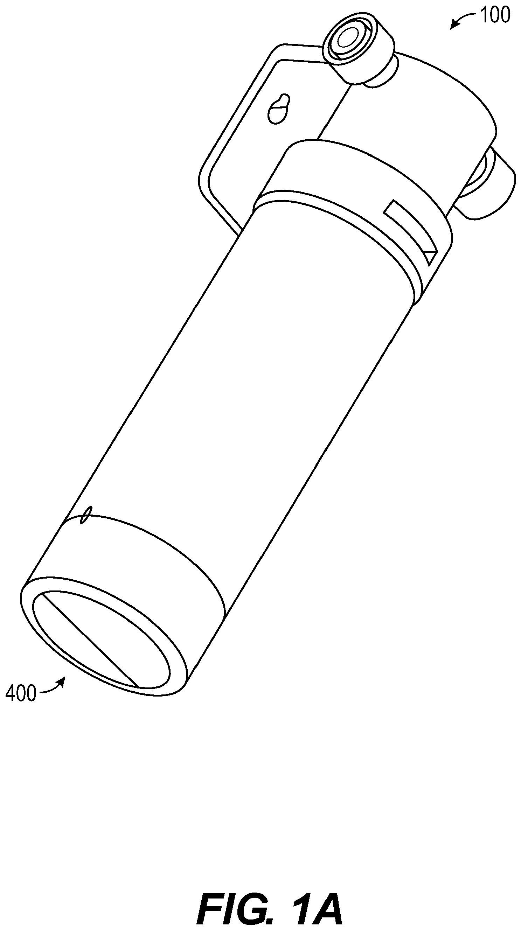

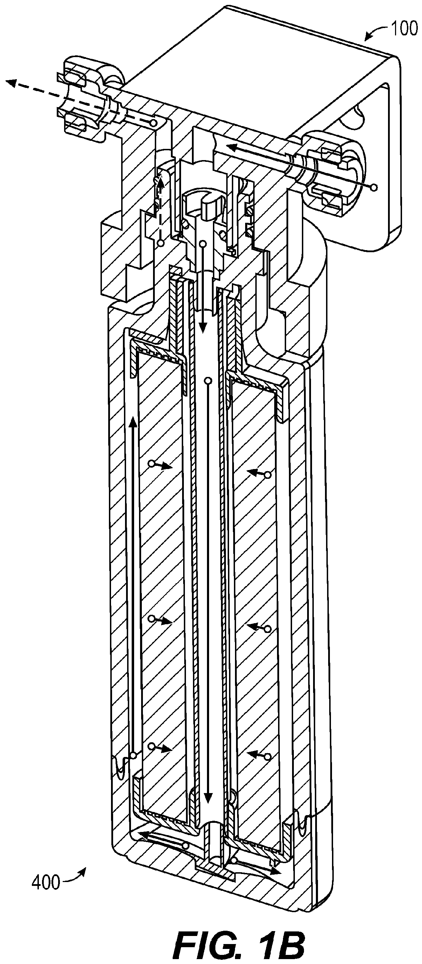

According to one exemplary embodiment, a water filtration system of the present disclosure may comprise a joint 100 and a filter element 400, as shown in Figures 1A and 1B. The arrows in Figure 1B indicate the water flow through the water filtration system. Unfiltered water enters into the joint 100 through the water inlet junction and flows downward through the joint body, entering into the filter element 400 and passing through the carbon rod cover of the filter element 400, and into the center pipe. On reaching the bottom of the filter element 400, the unfiltered water flows outward in all directions from the base of the center pipe and then upwards into the gap between the carbon rod and the filter element body. The unfiltered water enters into the carbon rod and the water is filtered while air in the water is broken into small air bubbles. Filtered water and the small air bubbles then pass through the top portion of the filter element and into the joint, where the filtered water exits the water filtration system through the water outlet junction in the joint.

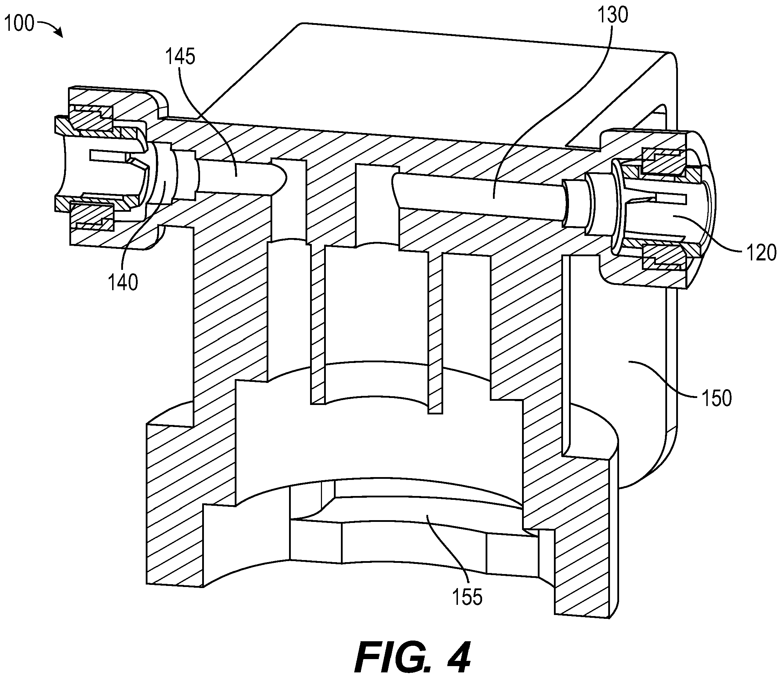

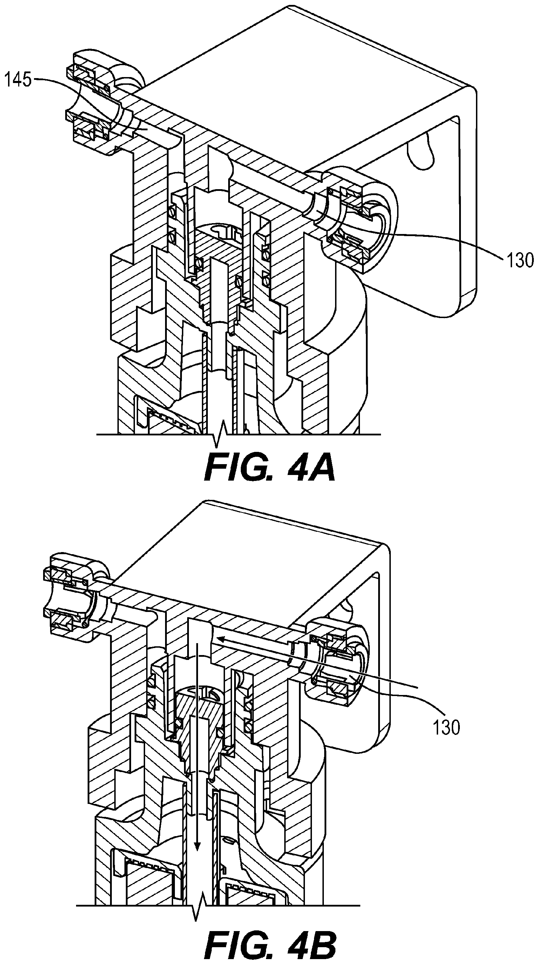

The joint body, as shown in Figures 4, 4A, and 4B, comprises a water inlet junction 120 and a water inlet cavity 130 through which water flows into the water filtration system. The joint body further comprises a water outlet junction 140 and a water outlet cavity 145 through which filtered water exits the water filtration system. The joint also comprises a connecting flange 155, and a hanging piece 150. The water inlet cavity 130 of the joint body is an L-shaped cylindrical cavity. One end of the cavity is connected to the water inlet junction 120, and the other end is connected to the carbon rod cover 420 of the filter element 400, and water enters the central hole of the carbon rod cover 420 of the filter element 400 through the water inlet cavity 130.

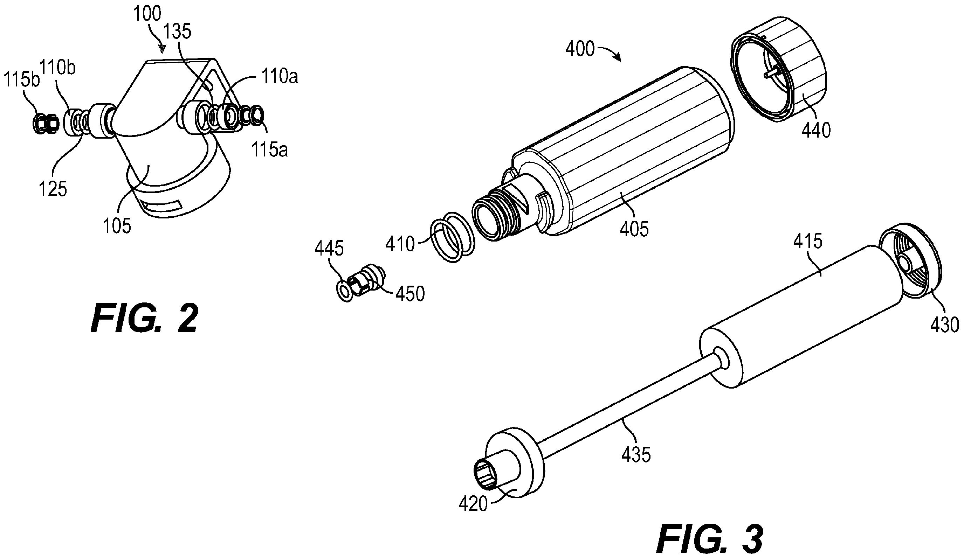

Joint 100 may further comprises a joint body 105, a water inlet sealing ring 125 and an outlet sealing ring 135, a cover plates 110a and 110b, and clips 115a and 115b, as shown in Figure 2. The sealing rings and cover plates serve at least the function of directing water.

The joint 100 may further comprise a water inlet joint and a water outlet joint. The water inlet joint may be located on the right side of the joint body, and one end of the water inlet joint comprises a water pipe hole, a sealing ring hole and a cover plate hole, where the circle of the water pipe hole is connected to the water pipe, the circle of the sealing ring hole is connected to the sealing ring, and the circle of the cover plate hole is connected to the outer circle of the cover plate.

Figure 3 shows the structure of filter element 400. Filter element 400 comprises an end cover 440, a body 405, a carbon rod cover 420, a center pipe 435, a carbon rod bottom 430, a carbon rod 415, a body sealing ring 410, a water inlet sealing ring 445, and a water inlet cover plate 450. When assembling the filter element, center pipe 435 is operatively coupled to one end of carbon rod cover 420 and inserted into the central hole of carbon rod 415, such that carbon rod cover 420 covers that end of the carbon rod which helps hold the center pipe 435 in place. Carbon rod bottom 430 is placed on the other end. Carbon rod 415 is then disposed inside of body 405 such that carbon rod cover 420 enters first. End cover 440 is coupled to body 405 to hold the carbon rod assembly in place. Body sealing ring 410, a water inlet sealing ring 445, and a water inlet cover plate 450 are placed on the smaller end of the body 405 to facilitate connection to and operative coupling with the joint 100. Sealing rings and cover plates provide at least the function of directing water flow.

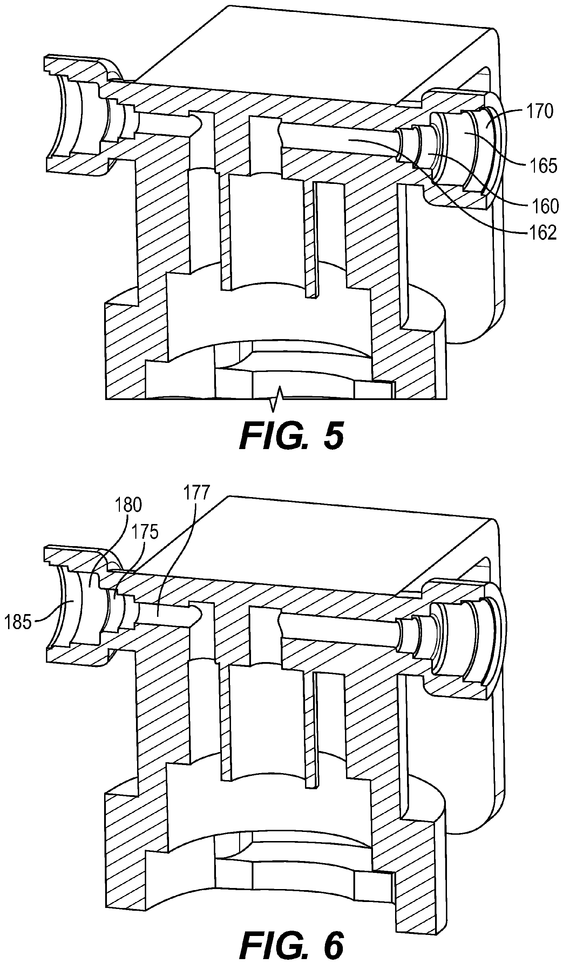

The water inlet junction 120 is located on the right side of the joint body 105, and one end of the water inlet junction 120 is provided with three stepped holes, as shown in Figure 5, namely a water pipe hole 160, a sealing ring hole 165, and a cover plate hole 170. The circle of the water pipe hole 160 is connected to the inlet water pipe 162, the circle of the sealing ring hole 165 is connected to the water inlet sealing ring 125, and the circle of the cover plate hole 170 is connected to the outer circle of the cover plate 110a.

The water outlet junction 140 is located on the left side of the joint body 105, and is provided with three stepped holes, as shown in Figure 6, namely a water pipe hole 175, a sealing ring hole 180, and a cover plate hole 185. The circle of the water pipe hole is connected to outlet water pipe 177, the circle of the sealing ring hole 180 is connected to the water outlet sealing ring 135, and the circle of the cover plate hole 185 is connected to the outer circle of the cover plate 110b.

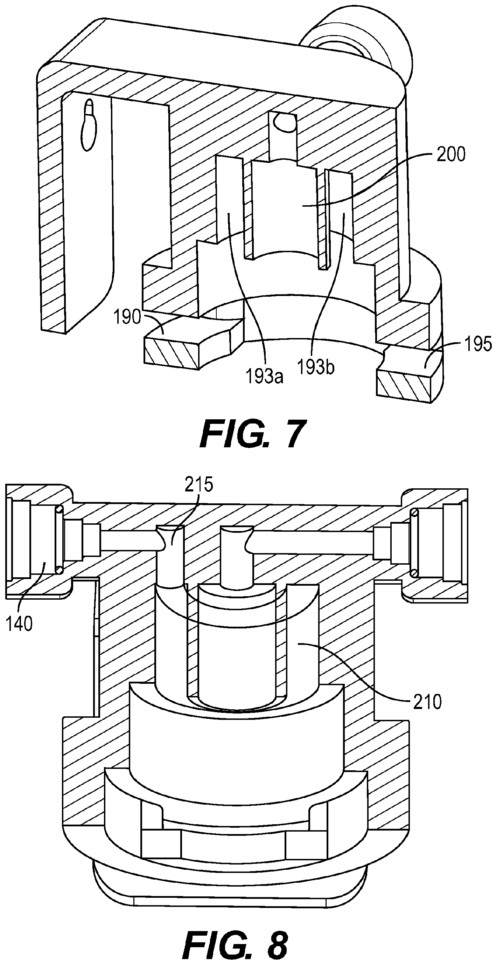

The connecting flange 155, as shown in Figure 7, is at the bottom of the joint body and has a C-shaped structure with two lug flanges 190 and 195. The upper part of the flange is provided with a pair of openings with rectangular projections 193a and 193b. The inner plane of the connector flange is attached and connected to the filter element end cover flange.

The water inlet boss 200 has a barrel-shaped structure and is at the center of the filter element body. In some embodiments, the barrel-shaped structure has a smaller diameter at one end and a larger diameter at the other end. One end of the water inlet boss 200 is connected to the joint body.

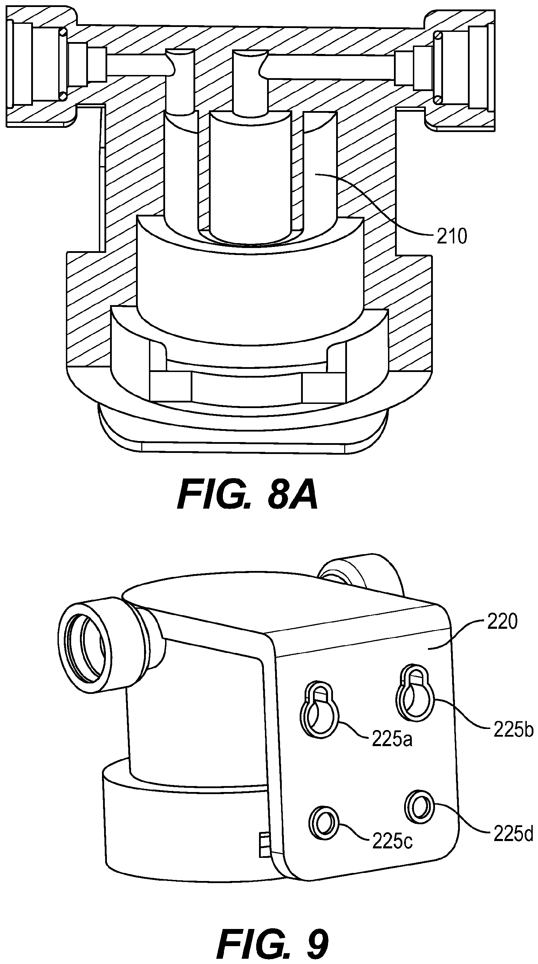

As in Figures 8 and 8A, the water outlet boss 210 is concentric with the water inlet boss 200, and the bottom of the boss 210 is provided with a hole, which is a part of the water outlet channel 215. One end of the water outlet boss 210 is connected to the water inlet boss 200 of the joint.

As shown in Figure 9, the hanging piece 220 is at the rear of the joint. The hanging piece 220 is provided with 4 bosses 225a, 225b, 225c, and 225d that are located on the back of the hanging piece 220, and the 4 bosses are each provided with a through hole. The through holes are used for installing fastening bolts (not shown) to fix the hanging pieces.

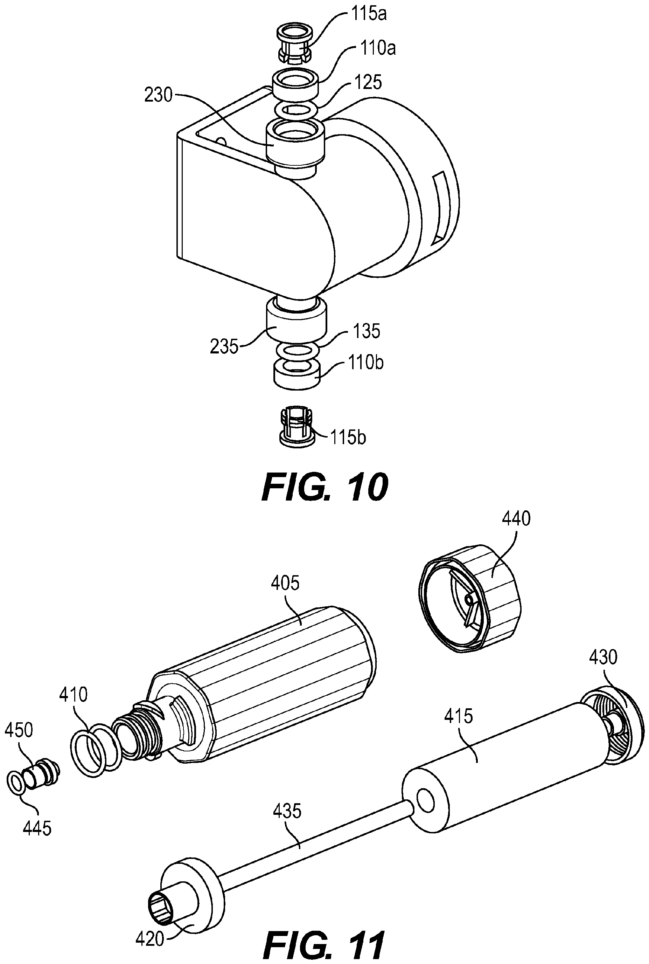

As shown in Figure 10, the water inlet sealing ring 125 and the cover plate 110a are respectively installed in the water inlet sealing ring hole165 and the water inlet cover plate hole 170, and the clip 115a is inserted into 110a. The sealing structure formed by the three parts is used for sealing the cannula. The water outlet sealing ring 135 and the cover plate 110b are respectively installed in the sealing ring hole 180 and the cover plate hole 185, and the clip 115b is inserted into 110b. The sealing structure formed by the three parts is used for sealing the cannula.

As shown in Figure 11, the filter element comprises an end cover 440, a filter element body 405, a carbon rod cover 420, a center pipe 435, a carbon rod bottom 430, a carbon rod 415, a body sealing ring 410, a water inlet sealing ring 445, and a water inlet cover plate 450.

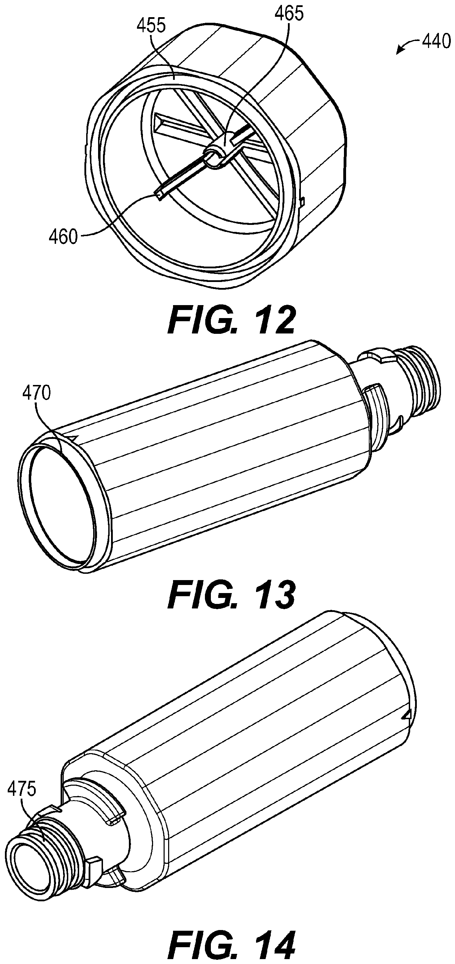

As shown in Figures 11 and 12, the end cover 440 has a cup-shaped structure, with one end open and the other end closed, and the open end is provided with a female half-coupling 455 which is connected to the male half-coupling of the body. It is used for welding with the body to form a sealed container, as shown at 470 in Figure 13. As shown in Figure 12, ribs 460 are provided at the bottom of the closed end for supporting the end face of the carbon rod bottom 430. A slotted cylinder 465 is provided at the bottom of the closed end, which is connected to the central pipe 435. It is used for water entering the gap between the filter element and the carbon rod 415. The gap formed between the filter element body and the outside surface of the carbon rod form a channel for the unfiltered water. Carbon rod bottom 430 may also have a plurality of grooves on the surface facing the carbon rod. These grooves may be concentric circles.

The body has a barrel-shaped structure, with a smaller diameter at one end and a larger diameter at the other end. A male half-coupling, which is welded with the female half-coupling on the end cover to form a closed container at 470 in Figure 13.

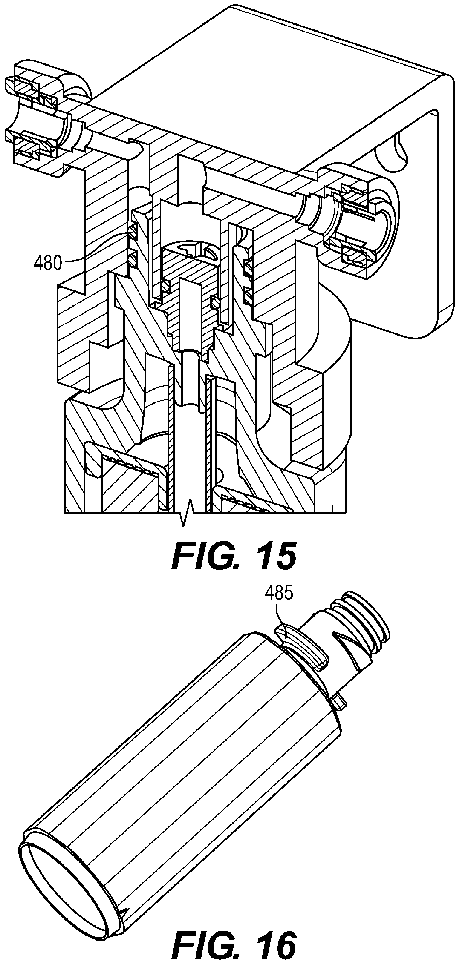

Two grooves at 475 in Figure 14 are provided on the outside of the other end, which are used for installing the body sealing ring 410. The body sealing ring is used for sealing the connector and the filter element body under pressure and seal the water after filtration by the filter element. The groove is shown at 480 in Figure 15, as the groove is installed in the groove on the body.

As shown in Figure 16, two fan-shaped bosses are provided at 485 below the groove, which are locking flanges of the filter element, and the fan-shaped bosses are used for the filter element to be attached to the inner plane of the connector flange, so as to lock the axial position.

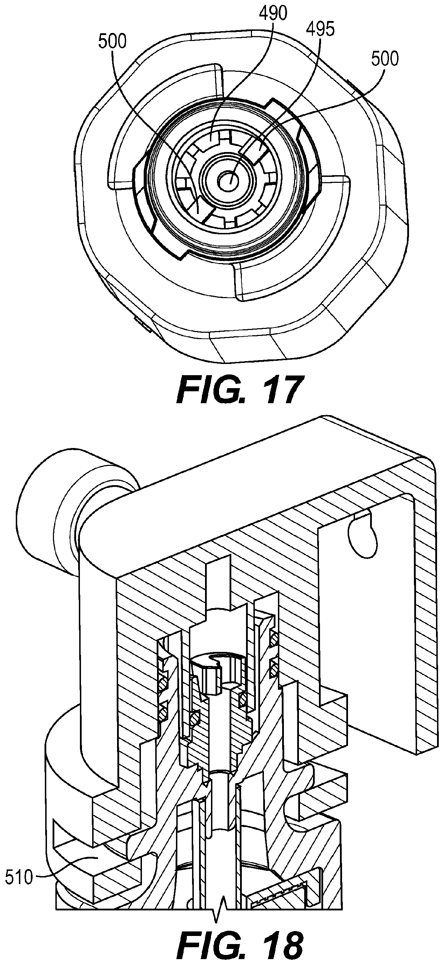

As shown in Figure 17, a grid hole 490 is provided in the inner cavity and a round hole is provided in the center of the body at a position with smaller diameter. Two bosses 500 are provided on the grid. The grid hole 490 has a fan-shaped structure, which is used for the passage of filtered water into the connector. Two stepped platforms are provided on the center hole 495.

Figure 18 shows, at 510, where the filter element flange is matched with the end face of the joint flange.

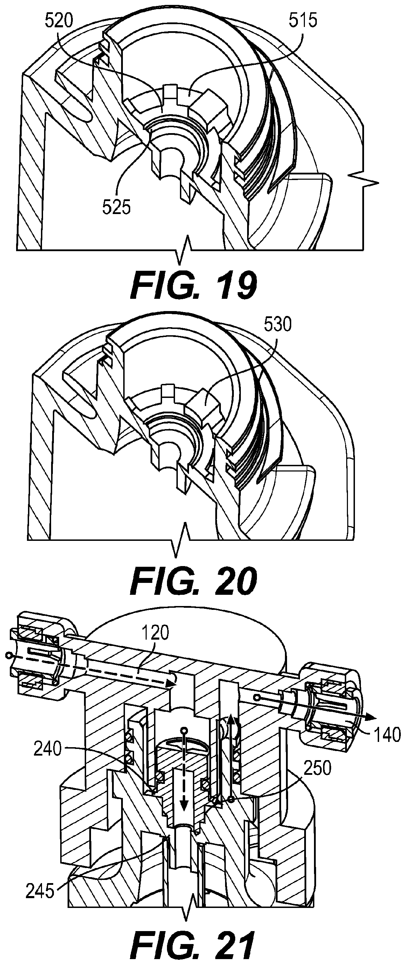

As shown in Figure 19, the bottom boss of the center hole is used for welding with the water inlet cover plate, at 525 in Figure 19. The upper boss 520 is axially matched with the water inlet cover plate to lock the water inlet cover plate. A welding line is provided between the bottom boss and the upper boss 520 for welding with the cover plate at 525, which is used for welding the water inlet cover plate to the boss of the center hole. The fan-shaped hole at 515 is used for filtered water to enter the connector.

The boss on the grid is matched with the groove on the water inlet cover plate to position the circumferential position of the water inlet cover plate, at 530 in Figure 20.

For example, as shown in Figure 21, water enters water inlet junction 120 flowing as indicated by the arrow. The axial direction of the water inlet end cover is shown at 240. The bottom welding is shown at 245, while the intermediate welding line is at 250. The water outlet junction is shown at 140.

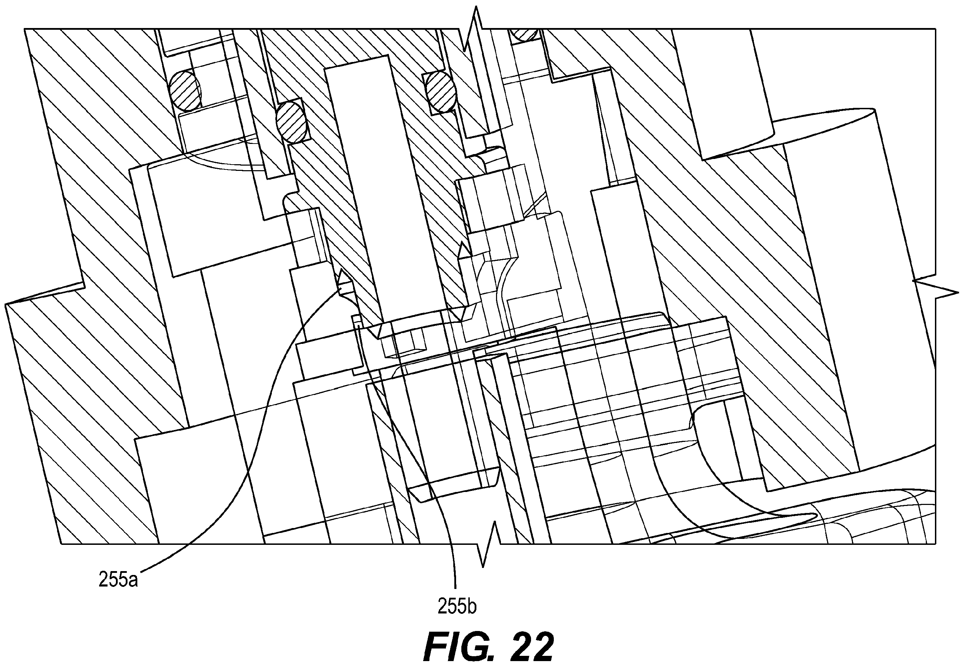

Bosses 255a and 255b in Figure 22 are used for positioning two positions of the water inlet cover plate.

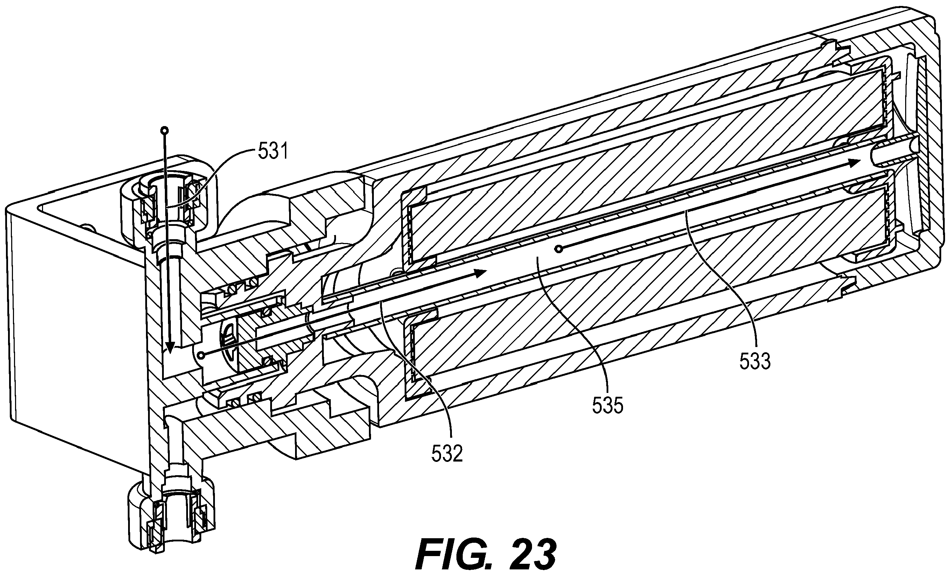

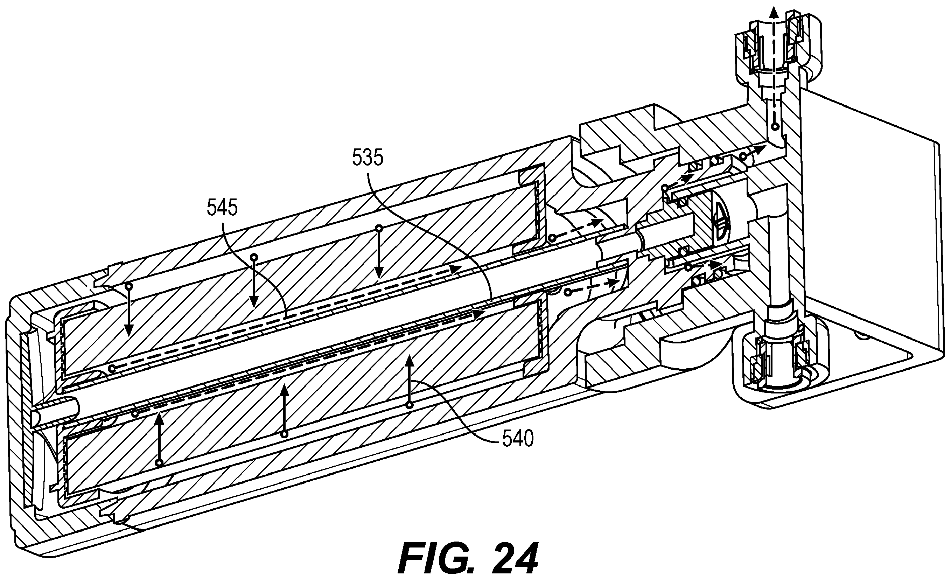

In Figures 23 and 24, arrows 531, 532, and 533 show the path that the water flows. The central round hole surrounding the arrow at 532 extends to the inner cavity of the body and forms a columnar boss, which is connected to the central pipe. The central hole, the water inlet cover plate, the central pipe and the slotted cylinder at the bottom of the end cover form a water inlet channel 535, and the unfiltered water 540 passes through the gap between the carbon rod and the shell in Figure 24. After the unfiltered water enters the carbon rod, it passes through the gap between the carbon rod, the center pipe, the carbon rod bottom, the carbon rod cover and the center pipe. The filtered water 545 passes through the gap between the body and the grid, and is discharged from the joint water outlet, forming a purified water channel. The carbon rod breaks up the air into small bubbles.

The carbon rod cover is installed and adhered to the carbon rod by glue, and the central hole of the carbon rod is coaxial with the central pipe. And the gap formed by the inner core of the carbon rod cover and the outer circle of the central pipe is used for the passage of filtered water.

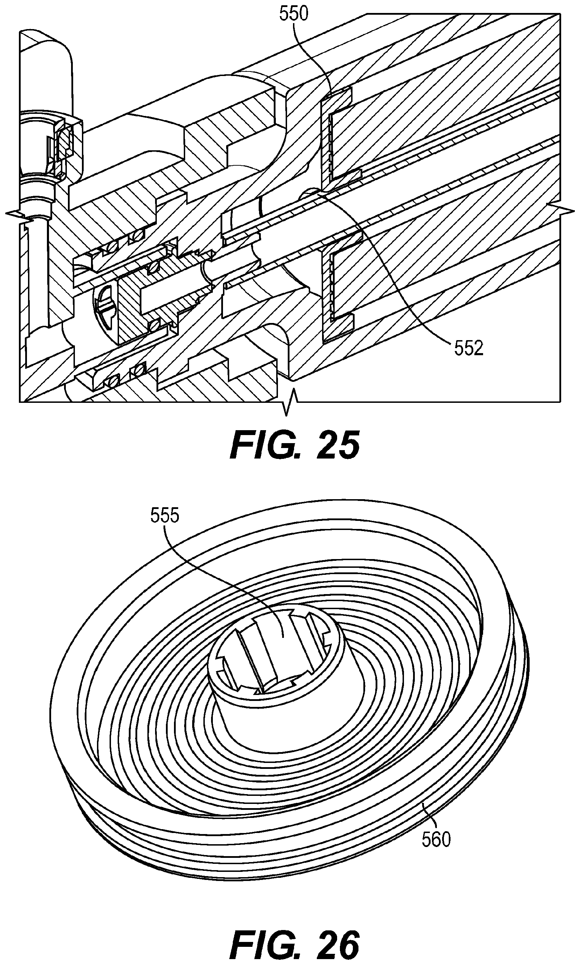

An external half-coupling of the other end of the carbon rod cover is matched with an internal half-coupling of the end cover for forming a sealing structure with the body for sealing the unfiltered water and the filtered water. The carbon rod cover has a disc-shaped structure, an outer circle is provided with a half-coupling which has a central hole. The cavity formed with the central pipe is a part of a filtered water channel, as shown at 552 in Figure 25. The sealing structure formed by the carbon rod cover groove, the carbon rod cover sealing ring and the body is used for sealing the unfiltered water and the filtered water at 550.

The carbon rod cover has a disc-shaped structure, and the outer circle is provided with a groove 560 which has a central hole 555, as shown in Figure 26. Groove 560 is used for installing the rubber ring.

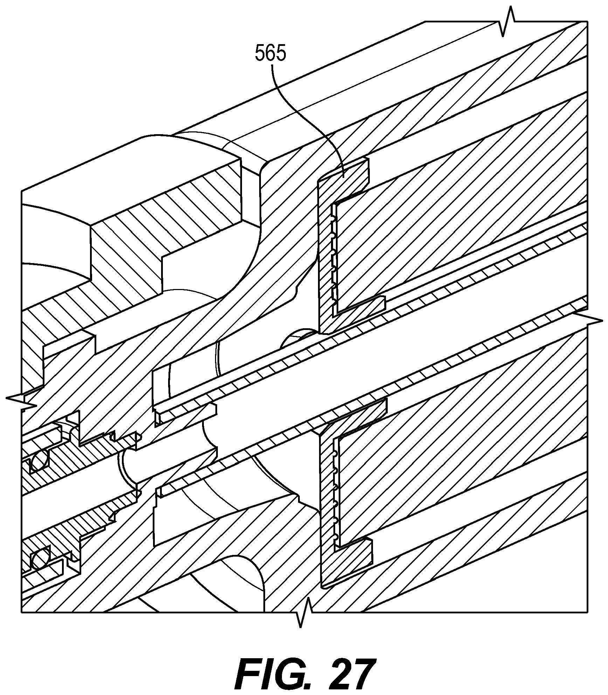

The sealing ring of the carbon rod cover is installed on the groove of the carbon rod cover and forms a sealing structure with the inner cavity of the body. The sealing structure is used for sealing the unfiltered water and the filtered water. At 565 in Figure 27, the rubber ring is installed on the carbon rod cover for sealing the unfiltered water and the filtered water.

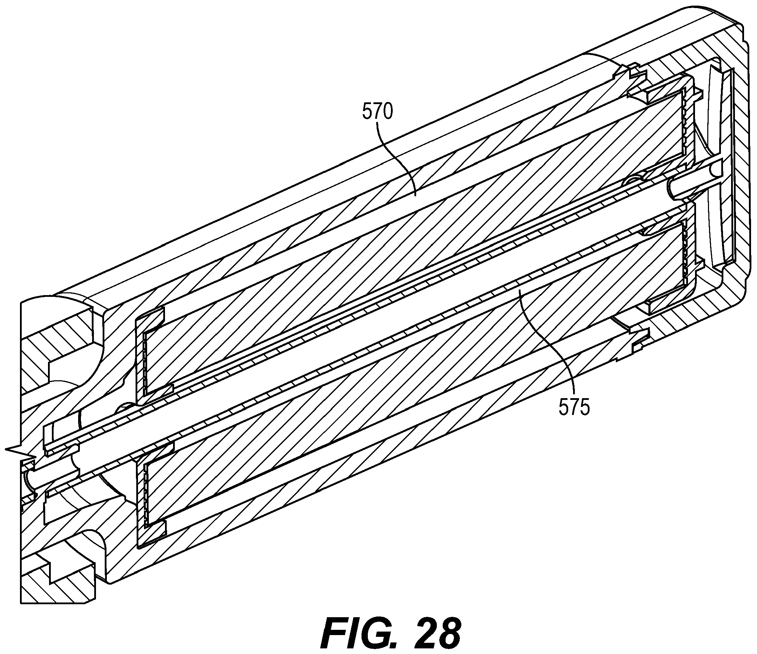

One end of the carbon rod is adhered to the carbon rod cover, and the other end is adhered to the carbon rod bottom. The outside of the carbon rod and the filter element body form an unfiltered water channel 570, as in Figure 28. The center of the carbon rod and the outer circle of the center pipe form unfiltered water channel 570. The water terminal is shown at 575.

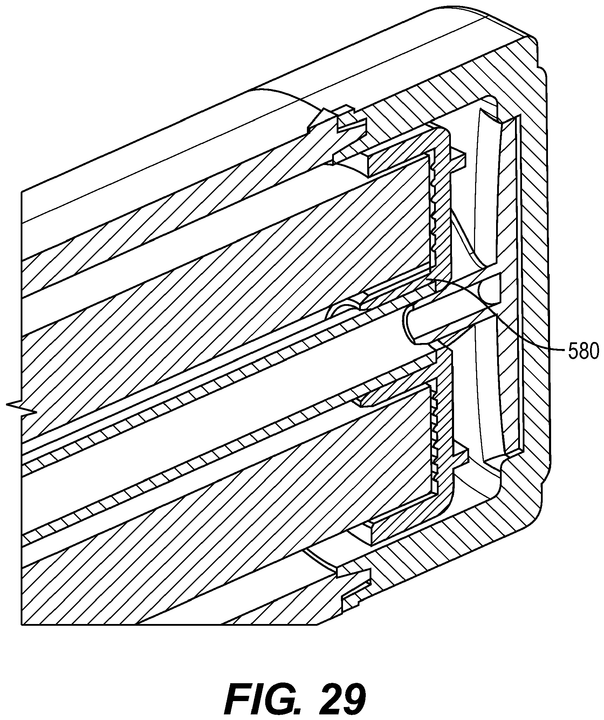

The carbon rod bottom has a disc-shaped structure with a hole in the center, and a boss. The inner cavity of the boss is connected to the outer circle of the central pipe. It forms a part of the filtered water channel with the inner cavity of the central pipe, and discharges the unfiltered water into the cavity of the filter element through the central hole. The carbon rod bottom and the center pipe form a water inlet channel, which is used for filling the unfiltered water into the cavity of the filter element at 580 in Figure 29.

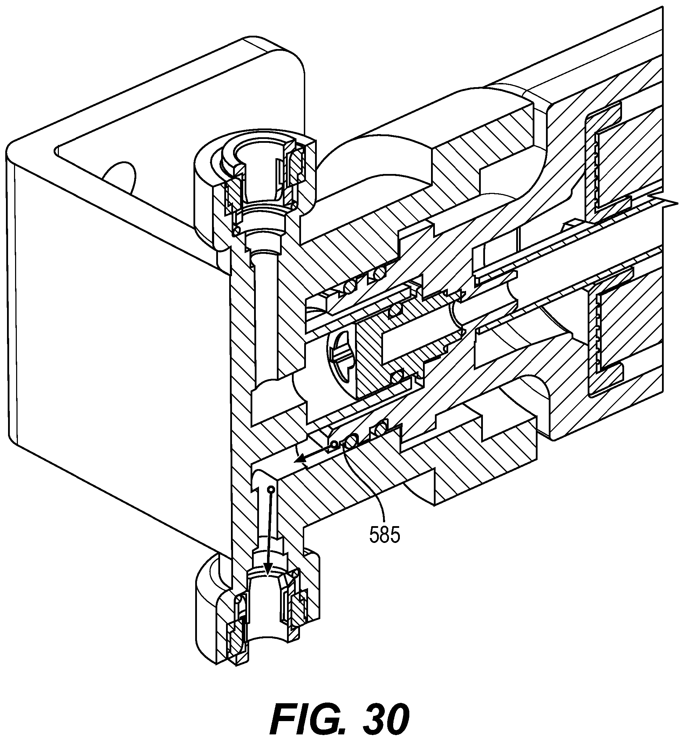

The body sealing ring is installed on the groove of the body for sealing the filtered water channel at 585 in Figure 30.

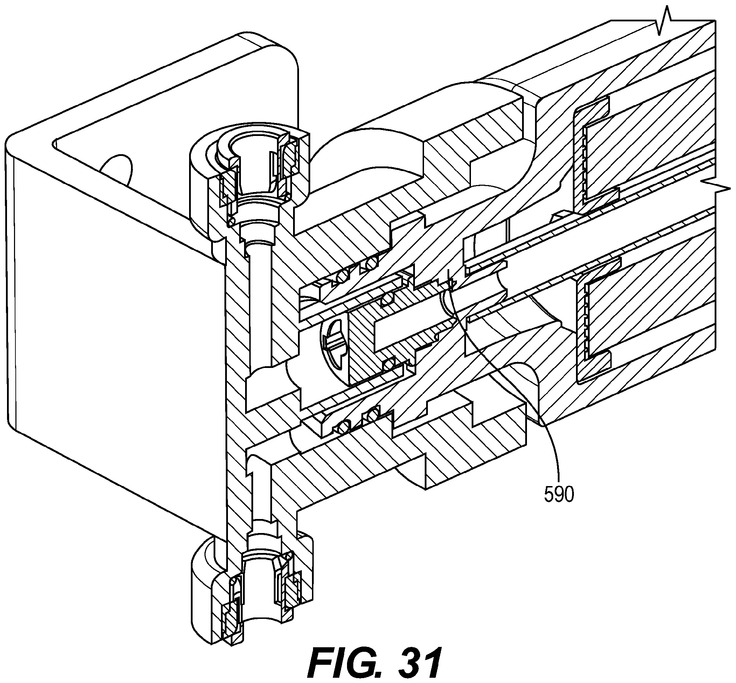

The water inlet cover plate is installed on the central hole of the body. The water inlet cover plate is provided with a welding line and is welded with the body as a whole. The cover plate may be welded to the body by bonding wire at 590 in Figure 31.

The water inlet cover plate is provided with a groove for installing the water inlet sealing ring. The sealing structure formed by the center holes of other joints is used for sealing the water inlet.

The cover plate is provided with a central hole for water entering the filter element.

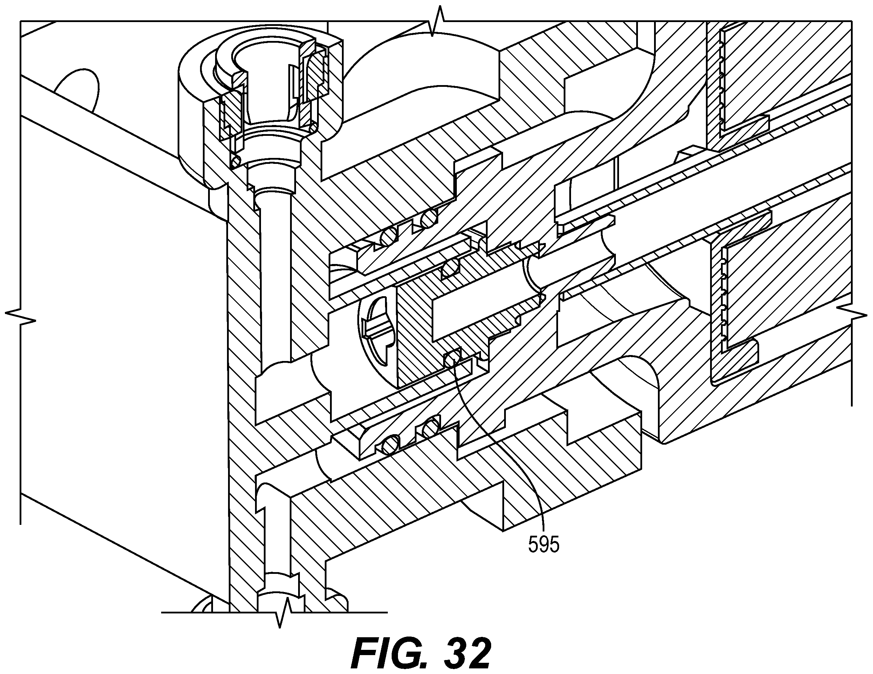

The water inlet sealing ring is installed on the cover plate groove, and the sealing structure formed by the center holes of other joints is used for sealing the water inlet of the filter element, as shown in Figure 32 at 595.

Although the foregoing embodiments have been described in detail by way of illustration and example for purposes of clarity of understanding, it will be readily apparent to those of ordinary skill in the art in light of the description herein that certain changes and modifications may be made thereto without departing from the spirit or scope of the appended claims. It is also to be understood that the terminology used herein is for the purpose of describing particular aspects only, and is not intended to be limiting, since the scope of the present invention will be limited only by the appended claims.

Other embodiments of the invention will be apparent to those skilled in the art from consideration of the specification and practice of the invention disclosed herein. It is intended that the specification and examples be considered as exemplary only, with a true scope and spirit of the invention being indicated by the appended claims.

It is noted that, as used herein and in any appended claims, the singular forms "a", "an", and "the" include plural referents unless the context clearly dictates otherwise. It is further noted that any claims may be drafted to exclude any optional element. As such, this statement is intended to serve as antecedent basis for use of such exclusive terminology as "solely," "only," and the like in connection with the recitation of claim elements or use of a "negative" limitation. As will be apparent to those of ordinary skill in the art upon reading this disclosure, each of the individual aspects described and illustrated herein has discrete components and features which may be readily separated from or combined with the features of any of the other several aspects without departing from the scope or spirit of the disclosure. Any recited method can be carried out in the order of events recited or in any other order that is logically possible. Accordingly, the preceding merely provides illustrative examples. It will be appreciated that those of ordinary skill in the art will be able to devise various arrangements which, although not explicitly described or shown herein, embody the principles of the disclosure and are included within its spirit and scope.

In the present disclosure, the terms "first," "second," and the like are used for descriptive purposes only and are not to be construed as indicating or implying a relative importance or a set number of technical features. Thus, features defining "first," "second," etc., may include one or more of the features, either explicitly or implicitly. In the description, unless otherwise stated, "a plurality of' means two or more. It should also be noted that terms "installation," "connected with each other," "connected," and the like are to be understood broadly, and may describe, for example, a fixed connection, a disassembled connection, an integral connection, a mechanical connection, an electrical connection, a direct connection, an indirect connection through an intermediate medium, and/or an internal connection between the inner portions of two elements. The specific meanings of the above and similar terms in the context of the present disclosure may be readily understood by a person of ordinary skill in the art.

Furthermore, all examples and conditional language recited herein are principally intended to aid the reader in understanding the principles of the invention and the concepts contributed by the inventors to furthering the art and are to be construed without limitation to such specifically recited examples and conditions. Moreover, all statements herein reciting principles and aspects of the invention, as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary configurations shown and described herein.

In this specification, various preferred embodiments have been described with reference to the accompanying drawings. It will be apparent, however, that various other modifications and changes may be made thereto, and additional embodiments may be implemented without departing from the broader scope of any claims that follow. The specification and drawings are accordingly to be regarded in an illustrative rather than restrictive sense.

## Claims

1. A method for purifying water, comprising:
receiving unfiltered water mixed with air into a filtration system through a water inlet junction of a joint operatively coupled to a filter element, wherein the unfiltered water and air received through the water inlet junction flows into an inlet channel of a filter element;
diverting the unfiltered water and air into the filter element through an inlet channel to a gap between a carbon rod and a filter element body;
passing the diverted water through a carbon rod to filter the water and divide the air into bubbles; and
discharging the filtered water and air bubbles;
preferably, the small bubbles and water are discharged via a water outlet junction of a joint operatively coupled to the filter element.

2. A water filtration system comprising:
a joint comprising:
a joint body comprising a water inlet cavity, a water outlet cavity, a water inlet joint, a water outlet joint, a connecting flange and a hanging piece;
a water inlet junction comprising a water inlet cavity configured to receive unfiltered water; and
a water outlet junction comprising a water outlet cavity configured to discharge filtered water; and
a connecting flange configured to join the joint and a filter element,
wherein the connecting flange is C-shaped; and
the filter element configured to purify the unfiltered water comprising:
a filter element body with one end open and a second end enclosed by a connector of smaller diameter than the rest of the filter element body;
a central pipe, a carbon rod, a carbon rod cover, and a carbon rod bottom disposed within the filter element body, a body sealing ring, a water inlet sealing ring, a water inlet cover plate; and an end cover covering the open end of the filter element body.

3. The water filtration system of claim 2, wherein
one end of the carbon rod is connected to a carbon rod cover and the opposite end is connected to a carbon rod bottom;
the carbon rod is configured within the filter element body such that the outside surface of the carbon rod and the filter element body form a channel for receiving unfiltered water; and
the channel allows the filtered water to pass into the water outlet junction.

4. The water filtration system of claim 2, wherein the water inlet junction further comprises a water inlet seating ring that engages with the water inlet junction to create a first seal, a first cover plate, and a first clip; and the water outlet junction further comprises a water outlet sealing ring that engages with the water outlet junction to create a second seal, a second cover plate, and a second clip.

5. The water filtration system of claim 2, wherein the water inlet joint is located on the right side of the joint body, and one end of the water inlet joint comprises a water pipe hole, a sealing ring hole and a cover plate hole; wherein the circle of the water pipe hole is connected to the water pipe, the circle of the sealing ring hole is connected to the sealing ring, and the circle of the cover plate hole is connected to the outer circle of the cover plate.

6. The water filtration system of claim 2, wherein the filter element further comprises a carbon rod cover coupled to the carbon rod, carbon rod cover sealing ring that engages with the carbon rod cover to create a first seal, and a body sealing ring that engages with the filter element body to create a second seal;
preferably, the body has a barrel-shaped structure with a smaller diameter at one end and a larger diameter at the other end; and the end cover has a cup-shaped structure, with one end open and the other end closed, and the open end is provided with a female half-coupling which is connected to the male half-coupling of the body configured for welding with the body to form a sealed container;
wherein two grooves are provided on the outside of the other end configured to install the body sealing ring;
wherein the body sealing ring is configured to seal the connector and the filter element body under pressure and seal the water after filtration by the filter element; and
wherein the bottom of the closed end further comprises ribs configured to support the end face of the carbon rod bottom; wherein a slotted cylinder is provided at the bottom of the closed end, which is connected to the central pipe configured for water to enter the gap between the filter element and the carbon rod.

7. The water filtration system of claim 6, wherein the filter element further comprises a water inlet cover plate and a water inlet sealing ring configured to be installed at the connector at one end of the filter element body wherein the water inlet sealing ring engages with the water inlet to create a third seal;
preferably, the water inlet cover plate comprises a central hole and is installed on the central hole of the body and further comprises a welding line configured to be welded with the body as a whole; and wherein the water inlet cover plate further comprises a groove for installing the water inlet sealing ring.

8. The water filtration system of claim 2, wherein
the joint further comprises a hanging piece attached to the top surface of the joint and extending substantially parallel to the body of the joint in the direction of the filter element; and
the hanging piece further comprises holes through the hanging piece.

9. The water filtration system of claim 2, wherein the filter element body comprises a male half coupling at one end; and the end cover comprises a first side that is open, the first side comprising a female half coupling configured to join with the male half coupling of the filter element body; and a second side that is substantially covered;
wherein the covered side of the end cover further comprises a slotted cylinder centrally located in the covered side; and the end cover further comprises a plurality of ribs radiating from the slotted cylinder to the inner edge of the end cover; and
wherein the end cover is a cup type structure with one end is open and one end closed, the opening end having a concave stop connected with the body convex stop configured to fuse with the body into a sealed container; and a rib position at the bottom of the closed end to support the bottom end face of the carbon rod; a slotted column at the bottom of the closed end is connected to the central tube; the gap between the inlet water into the filter element and the carbon rod;
preferably, the female half coupling and the male half coupling are welded together.

10. The water filtration system of claim 6, wherein the outer surface of the connector of the filter element further comprises one or more fan-shaped flanges configured to connect to the connecting flange in the joint;
preferably, the connector of the filter element further comprises two bosses opposite one another on the inside surface;
preferably, the connector comprises a plurality of fan-shaped holes for the filtered water to enter the connector;
preferably, the plurality of fan-shaped holes are contained in a boss.
preferably, the filter element and the connector flange further comprise two fan-shaped lugs below the groove for the locking flange of the filter element configured to lock the axial position of the inner plane of the filter element and the connector flange;
preferably, the boss is welded to the water inlet cover plate of the filter element.

11. The water filtration system of claim 2, wherein the carbon rod causes air mixed into the unfiltered water to break up into small bubbles that are mixed with the filtered water.

12. A joint for a water filtration system, comprising:
a water inlet junction on the first side of the joint;
a water outlet junction on the opposite side as the first side of the joint; and
a connecting flange;
wherein the water inlet junction is configured to receive unfiltered water
through a water inlet cavity and the water outlet junction is configured to discharge filtered water through a water outlet cavity;
preferably, the joint further comprises a hanging piece attached to the top surface of the joint and extending substantially parallel to the body of the joint in the direction of the filter element; wherein the hanging piece further comprises holes through the hanging piece.

13. A filter element for a water filtration system, comprising:
a filter element body with one end open and a second end enclosed by a connector of smaller diameter than the rest of the filter element body;
a central pipe and a carbon rod disposed within the filter element body;
an end cover covering a first end of the filter element body;
a carbon rod cover covering a second end of the filter element body,
a carbon rod cover sealing ring that engages with the carbon rod cover to create a first seal, and
a body sealing ring that engages with the filter element body to create a second seal;
preferably, the carbon rod divides air in the unfiltered water into small bubbles that are mixed throughout the filtered water.
